# EUROPEAN PATENT APPLICATION

(11) **EP 1 126 394 A1**
(43) Date of publication of application: **22.08.2001**
(21) Application number: 01300944.4
(22) Date of filing: 02.02.2001
(51) Int. Cl.: G06F 17/60

(54) **System and method for generation of interactive direct marketing using the internet**

(30) Priority: 03.02.2000 US 179972 P; 08.09.2000 US 658036
(71) Applicant: RDA Interactive LLC, New York, New York 10013 (US)
(72) Inventor: Karlsson, Karl, New York, NY 10024 (US); Racz, Michael, New York, NY 10017 (US)
(74) Representative: Beresford, Keith Denis Lewis

(57) **Abstract**

A system and method for the Internet implementation and generation of a direct marketing advertising message to a targeted consumer, based upon (a) demographic information provided to the system by a personal acquaintance of the potential consumer; or, (b) the selection of product specific information available on the system by a personal acquaintance of the potential consumer. In brief, the system of this invention is resident on and implemented *via* indirect (through a sponsor web site) or direct internet access to the system (RealMailNetwork file server). Upon gaining access to the system server, an individual is prompted to create a personal message to an addressee. In the course of constructing the letter, the individual provides demographic information relative to the addressee that the system matches or correlates with one or more system sponsors. Upon completion of the letter, the individual is prompted to "send" the letter to the addressee. The information contained in the letter, and the associated sponsor information which is specific (targeted) for the addressee, is merged and, thereafter, translated into a file format that can be archived and/or printed. The printed letter, along with the associated sponsor related materials, are delivered to the addressee by regular post. The system retains the information of each of the site visitor and addressee for future targeted direct and/or Internet advertising campaigns.

## Description

### Background Of The Invention

### 1. Related Applications

This application is based on a Provisional Application, Serial No. 60/179,972, filed on February 3, 2000, entitled "Internet Personal Delivery of Sponsored Marketing Messages."

### 2. Field Of The Invention

This invention relates to a system and to a method for providing direct marketing services via the Internet, More specifically, this invention relates to an Internet based system and method that produces the delivery of sponsored marketing messages within personal direct mail using the Internet as an interactive vehicle to collect a targeted/endorsed and referred customer list. The system further allows the advertiser to accumulate a marketing database list of names that have been referred by its customers. The personalized direct marketing message is created through Internet access to an advertiser's web site or portal website, which prompts the site visitor to avail himself/herself of a personal mail service, whereby the site visitor creates a personal message for posting to an addressee. The message is subsequently digitally merged with promotional materials that correspond with the addressee's demographic profile and/or interests, and thereafter translated into a file format suitable for printing, The merged document is ultimately printed and posted to the addressee by the system, on behalf of the site visitor and an advertising sponsor, The posted message typically includes a sponsor message and/or coupons which encourage/promote the purchase of the sponsor's products. The sponsor's product or message that accompanies the posted mailer is based, in part, upon information provided to the sponsor by the visitor, and, in part, upon the identity of the sponsor site from which the personal letter originates.

A further key element to the invention is the message recipient's likelihood of opening the mailer and having the sponsor's message delivered due to the personal nature of the delivered message.

### 3. Description of the Prior Art

The direct marketing of a product or service by a advertising sponsor to a consumer has traditionally been based upon the selection of a target population from a mailing list of the potential targeted audience (which presumably have certain demographic characteristics or preferences that create a purchasing bias in favor ofthe product sponsor/advertiser). Under the best of circumstances, the sponsor/advertiser must rely upon the source of the mailing list, and if available, some statistics which support the purchasing bias of the target audience on the mailing list. Direct mailing materials are then prepared and directly mailed to all list participants. No interaction between the advertisers and the consumer would take place. Lists were comprised by third-party providers and "rented" to advertisers, direct marketing database lists have become more sophisticated and focused over the years but the premise of direct mail marketing has remained relatively unchanged.

With the popularization of the World Wide Web (the Internet's multimedia information retrieval system), the marketing of products and services has taken on a new, and as yet undefined, dimension because of pro-active consumer involvement in the solicitation of product and service information.

The Internet has furthered the process of direct marketing through the advent of e-mail direct marketing. E-mail marketing attempts to directly market the sponsor/advertiser's product or service to individuals through the use of Internet technology. Again, the premise is to market to a focused segment of the target population from a list of e-mail addresses of potential customers (which presumably have certain demographic characteristics or preferences that create a purchasing bias in favor of the sponsor/advertiser). The windfall in this method lies within the response mechanism that allows a consumer to immediately access the advertiser/sponsor's website with a click of their mouse. Ostensibly, this model has advantages over the traditional direct marketing technique. However, the original marketing database list is still comprised of an unknown audience who have interests near to or related to the actual sponsor/advertiser. These lists are still "rented" to the purchaser by a third-party provider and can still only be used for a singular purpose.

More recent attempts have been made to personalize e-mail address lists by allowing targeted audiences to opt-in to receiving marketing materials by expressing their interest during on-line registration processes, Marketers arc now compiling lists of addresses based upon these opt-in preferences and then markeling to those preferences. Again, marketers still must "rent" these lists for a singular purpose and never know the contents of these lists until responses are received.

In the case of both e-mail marketing as well as traditional direct marketing, the consumers remain unknown to the sponsor/advertiser and the advertiser remains unknown to the recipient. The result is a high number of unopened or unread messages due to this haphazard matching process.

However, present Internet based tools still do not provide the advertiser with the ability to forward his product specific information to a potential customer, who has through association been made known to the marketer through a referring customer. Current customers have been shown to wild an important role in shaping the opinions of most users on the web. Using a current client base as a means of referring others remains a sought after goal for all direct marketing vehicles.

As is apparent from the above discussion, the selection of a target audience for the exposure to and/or receipt of sponsor promotional materials has not changed in any significant way from the historical methods used in direct mail advertising campaigns. The addition of Internet e-mail and banner advertising based on promotional messaging has simply reduced the cost of delivery of the sponsor's message and developed easier response mechanisms. Notwithstanding, the problem of sponsor selection of the target audience remains essentially the same - identification of a population of potential consumers wherein the demographics of the population is disposed toward the sponsors' products. The present Internet based marketing approach to this problem is dependant upon pro-active consumer involvement in the process, and even then is inefficient, because it does not provide an information base upon which to build for future promotions or provide a means of introducing unknown parties. Moreover, to the extent that such demographic information relative to a given consumer is acquired, in reference to a given product or service, it is rarely shared with other vendors of dissimilar and unrelated products. Thus, there continues to exist a need to improve and enhance the marketing of products, and such need, if to be successful, must merge the personalization of the Internet with the success of traditional direct mail marketing methods.

### OBJECTS OF THE INVENTION

It is the object of this invention to remedy the above as well as related deficiencies in the prior art.

More specifically, it is the principle object of this invention to provide a system and method for the generation of direct marketing advertising messages to a targeted audience for delivery to the targeted audience by a traditional carrier service (e.g. US Post Office).

It is another object of this invention to establish a network of sponsors and multiple access points for the targeted audience, while utilizing a common base of technology integrating all points of access.

It is a further object of this invention to provide a free Internet based system and method for the integration of a personally composed letter and sponsor related information, which includes a direct marketing advertising message to a targeted consumer audience for delivery by traditional carrier service (e.g. US Post Office).

It is yet another object of this invention to provide an Internet based system and method for the on-line (e.g. internel) implementation of a real mail network (RMN) for the composition of a personal letter to a potential consumer by an acquaintance of the potential consumer, incorporating a direct marketing advertising message to a targeted audience, for delivery by traditional carrier service (e.g. US Post Office).

It is still yet another object ofthis invention to provide an Internet based system and method for sponsor support of a personal message service on its web site which permits a visitor to the sponsor's site to access a real mail network (RMN) for the composition of a personal letter to one or more acquaintances of the visitor, which letter incorporates a direct marketing advertising message to the visitor's acquaintance(s) for delivery by traditional carrier service (e,g, US Post Office).

It is a further object of this invention to allow marketers to interactively build new marketing lists based upon referrals, thereby reducing the happenstance nature in forming these relationships.

Additional objects of this invention include the adaptation of the Internet based system and method of this invention to develop a sponsor's data base listing of the referred potential targeted audience that can be canvassed and solicited by traditional carrier delivery of the sponsor's message and interactive methods.

### SUMMARY OF THE INVENTION

The above and related objects are achieved by providing an Internet based system and method for sponsor implementation and support of an on-line, or internet accessible network, (also hereinafter "Real Mail Network" or "RMN") wherein site visitors to a sponsor's web site are given access and encouraged to avail themselves of a messaging system for the composition of a postable message to an acquaintance for delivery *via* traditional carrier methods. This latter web site is denominated the "originating sponsor's portal" since it is a point of entry of the visitor and, thereby his link to the Real Mail Network.

Preliminary to the composition of the letter by the system, the site visitor is prompted to provide personal information to the system server to enable his subsequent identification by the system as the "sender" of the letter. As a result of this initial query of the visitor by the system, the visitor can be assigned an ID name by the system to facilitate his additional/future access and use of the system. Upon each access of the system, the visitor is requested to provide certain demographic information relative to the intended recipient/addressec of his letter, and/or the types of products and/or services that he believes would be of interest to the recipient/addressee of his letter. For example, if the visitor to the system indicated, in response to a system prompt, that the intended recipient/addressee of the letter was expecting the birth of a baby, the system would automatically link the visitor's letter to the recipient/addressee with network sponsors that provide products and services for newborns and the parents of a newborn. Alternatively, the visitor could independently select certain product and/or service information from the sponsors on the system for forwarding to (inclusion in) the intended recipient/addressee of the visitor's letter. In each instance, the intended recipient/addressee of the letter, and accompanying promotional materials from a advertising sponsor, would be intelligently matched by an individual (visitor) having personal knowledge of the intended recipient's personal needs and lifestyle.

Alternatively, if the visitor is already at the sponsor's site, then he is automatically matched to the sponsor's current promotion that is attached to the visitor's letter. In exchange for the information that the site visitor (sender) provides relative to himself and the letter recipient, the sender is allowed to send the letter free of postage and ancillary expenses..

The postable letter created by the visitor on the system would, thus, contain an appropriate sponsor message targeted to the individual recipient's needs and/or lifestyle, unobtrusively integrated within the framework of the hard copy of the personal letter. In the preferred embodiments of this invention, the personal letter would also include a message from the "originating sponsor's portal" promoting his products or services. Once the composition of the letter is completed, die visitor is prompted by the system, and the system "sends" the letter to the recipient. This is accomplished by the system merging of the letter and the targeted promotional materials and translation of the merged document into a file format that is suitable for printing. The merged and translated file can then be transmitted to a facility cquípped with a printer wherein a hard copy of the merged document is generated and posted to the recipient/addressee at the cost of the sponsor. At the time of generation of a hard copy and mailing of the letter at the direction of the system, the sponsor (associated with the letter) can include additional enclosures in the envelope (e.g. coupons, catalog, product samples, etc.) for the convenience of the recipient.

The system retains a file that is specific for each visitor and the recipients of the visitor's letter, as part of a permanent system record, for follow-up and confirmation of interest in sponsor's products and services; and, for use in future promotions of products and/or services that would be of interest to the vísitor and to the recipient/addressee of the letter, based upon system information obtained by the system incident to the initial, and any subsequent interaction of the visitor and/or recipient/addressee with the system of the Network.

The system of this invention can be utilized in the promotion of consumer products, the identification of leads for professional services (e.g. medical, cosmetic and dental services) and intangible properties (e.g. life & health insurance policies). The goals and benefits of the system are three fold: (a) the delivery of a sponsor's marketing message to a targeted audience, based upon a referral by a current visitor or customer to a sponsor's Web site; and b) to obtain a high level of deliverable and read messages to potential targeted audience; and (c) to elicit a response to the sponsor's message, which provides verification of a match between the sponsor and sponsor's promotional message.

### BRIEF DESCRIPTION OF THE DRAWINGS

Fig. 1 is flow chart depicting the manner in which a user can access the Real Mail Network of this invention;
Fig. 2 illustrates the manner in which a visitor (user) can transfer to the portal used by the Real Mail Network;
Fig. 3 is flow chart depicting the acquisition of information for use in the letter to be posted;
Fig. 4 is a flow chart and menu screens for visitor entry of personal identification information, and information relative to intended recipient/addressee of Real Mail Letter;
Fig. 5 is flow chart depicting visitor composition of a personal letter to a recipient/addressee utilizing the Real Mail Network of this invention;
Figs. 7-9 are flow charts illustrating data processing steps used with the Real Mail Network;
Fig. 10 is flow chart depicting the assimilation/translation of the processing of the visitor's letter and associated sponsor related input, including the printing of a hard copy of the letter;
Fig. 11 illustrates the actual posting operation; and
Fig. 12 illustrates a follow-up step after the letter is posted.

### DESCRIPTION OF THE INVENTION INCLUDING PREFERRED EMBODIMENTS

The system of this invention provides a method for the Internet implementation and generation of a direct marketing advertising message to a consumer, based upon (a) demographic information and/or significant social/life style milestones for said consumer that is provided to the system by a personal acquaintance of said consumer; or, (b) the selection of product specific information available on the system by a personal acquaintance of the potential consumer. In brief, the system of this invention is resident on and implemented *via* internet access to the system, either directly (e.g. RealMailNetwork web address), or indirectly through a sponsor web site having a link to the system. In the latter instance, the sponsor web site, for convenience, is denominated the "originating sponsor portal". In latter instance, the sponsor web site used to access the Real Mail Network server is preferably identified in some fashion on the direct marketing advertising message to the potential consumer.

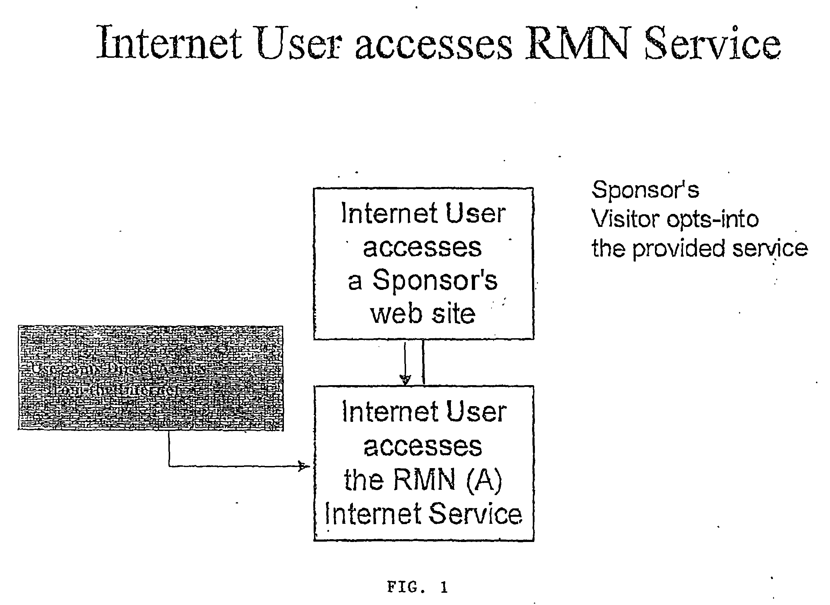

Fig. 1 is an overview of the system of this invention, including a flow chart illustrating the relationships of various modules of the system of this invention; and, of the access thereto by a visitor to the system.

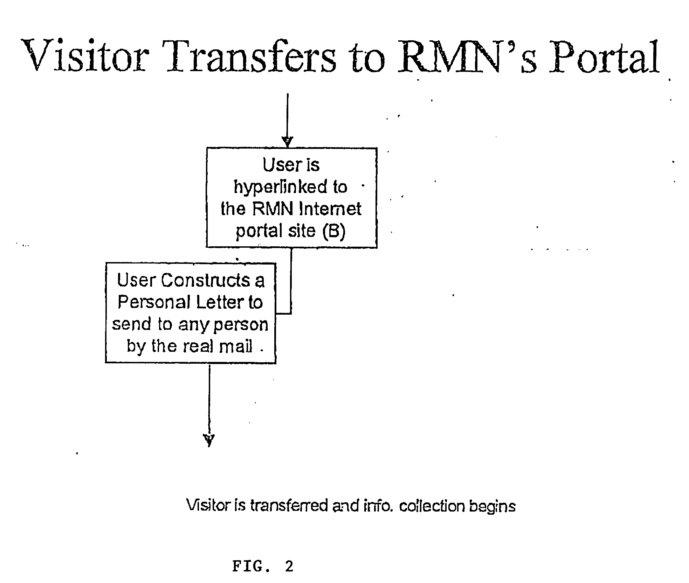

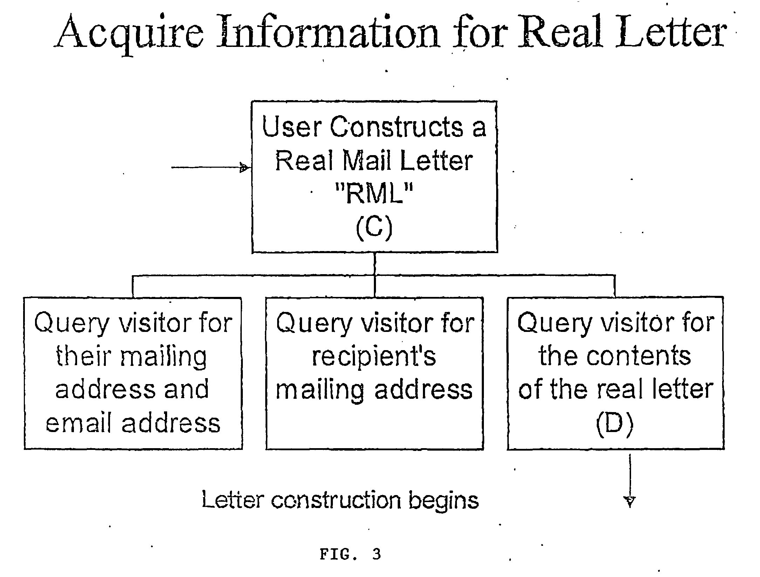

As illustrated in Figs. 1 and 2, the visitor (also hereinafter "sender" or "personal acquaintance" or "personal acquaintance of addressee") gains access to the system, either directly through the Internet, or by means of a link to the system server from one of the system sponsors' web site. Once system access is achieved, the visitor is a connected to the Real Mail Network via a "hyperlink" to the Real Mail Network (RMN) internet portal site. At this juncture, the visitor is prompted, as illustrated in Fig. 3, to provide information relative to his identity and to the intended recipient/addressee of his letter. The system prompts for personal information, relative to the visitor, can include his e-mail address and other demographic information that is required by the system to assign a personal ID signature or access code unique to the visitor.

The visitor is also prompted (as shown in Fig. 3) to provide the name and addresses (e-mail and street address) of the recipient. In order to effectively match a sponsor's Promotional message and the recipient, the visitor will also be prompted (as shown in Fig. 3) to supply personal information relative to the recipient/addressee (demographic information relative to the recipient). The demographic information elicited can typically include, for example, the recipient's e-mail address, street address, zip code, gender, age, marital status, attained educational level, income bracket, principle residence, monthly mortgage payment, monthly rent payment, pet ownership, nationality, professional affiliations, type of car driven, credit card preference and recreational activities. In the preferred embodiments of the system, the visitor can also be prompted to supply personal information relative to significant social/life style milestones the recipient/addressee (e.g. birth of a newborn, engagement to married, dissolution of marriage, relocation of residence, purchase of new residence, graduation for educational institution, attainment of new job and promotion within career path engagement to be married, anticipate birth of a child, graduation, anticipate purchase of new home, etc.).

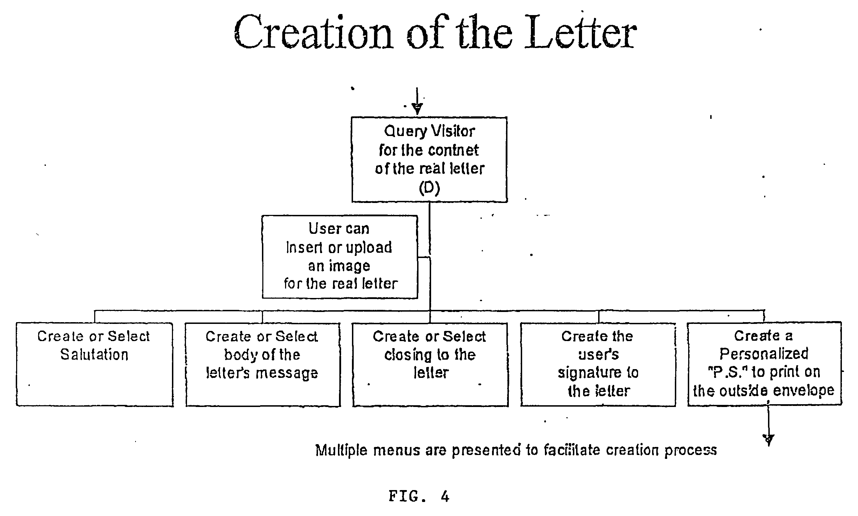

Once the system has been "initialized" relative to the visitor (e.g. he attains or is assigned "Member" status on the RMN), the system thereafter prompts the visitor in the composition of the personal letter to a recipient/addressee (also herein "consumer", "potential consumer" or "targeted consumer"). Fig. 4 illustrates a number of steps and prompts used by the system to guide the visitor in the construct of this personal letter (Real Mail Letter). More specifically, the visitor is permitted to embellish the letter with graphics from among the choices available on the system, or with "attachments" from his own personal computer. In addition the visitor is prompted by the system to select a "greeting" or "salutation", composes the body copy of the message, create a "closing", "signature" and personalized post script or "PS". In each instance, the visitor can select from among the choices available on the system, compose his own personalized insert, or elect not to include such insert in his personalized letter.

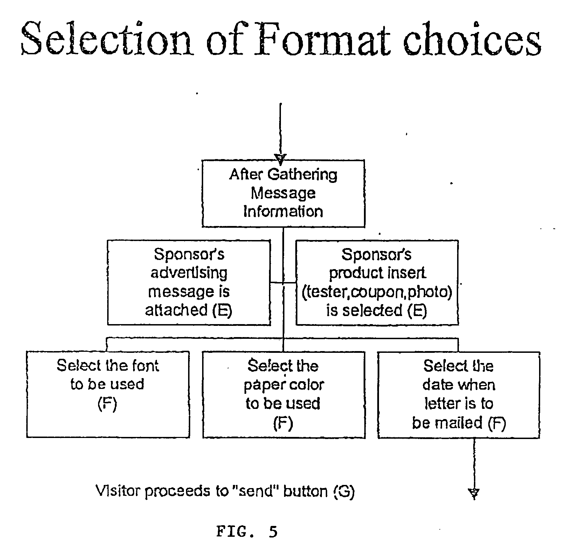

Fig. 5 illustrates a number of steps and prompts used by the system to guide the visitor in the formatting of his personal letter to the recipient. More specifically, once the content of the personal letter 10 the recipient/addressee has been composed, the visitor can select from among the available fonts, the color of paper for printing of the letter and the date when the letter is to be sent. selection, etc.). Either prior to, concurrent with or subsequent to completion of the composition, and the personalization of the letter by the visitor, the system searches from among the available sponsor participants to identify/match sponsors with the interests of the letter recipient/addressee, based upon visitor supplied demographics; or, with a sponsor that matches the visitor's selection of a significant social/life style milestones of the recipient. Once this matching has been accomplished, the system retrieves relevant sponsor materials for unobtrusive integration into the personal letter to the recipient/addressee at the time of the composition of the letter by the visitor.

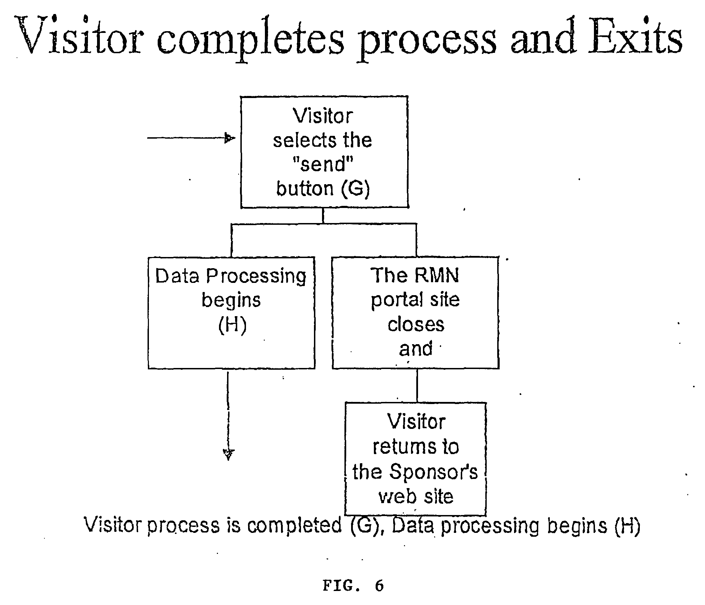

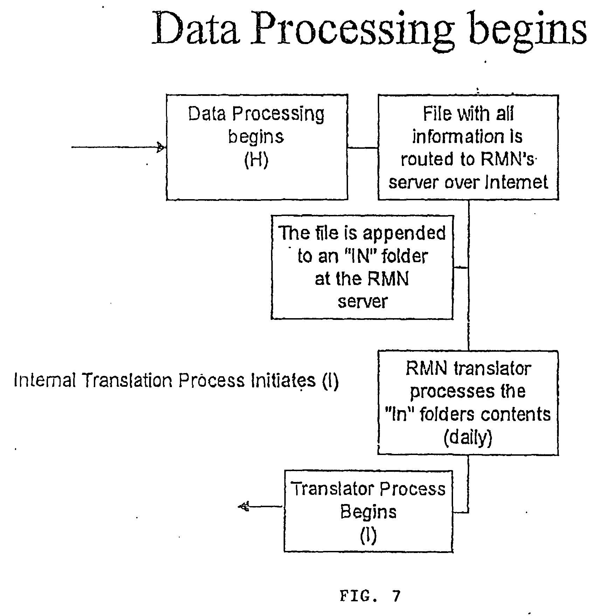

As illustrated in Fig. 6, this integration of the sponsor materials and letter generally is effected when the visitor is prompted by the system to execute a "send" command. Upon such command being received by the system, the system initiates the processing of the Real Mail Letter (RMt.), including appending the sponsor message at the bottom of the printed copy of the letter, and/or the addition of coupons or other promotional materials. Initial processing steps arc shown in Fig. 7, where an "In" folder is prepared for each letter,

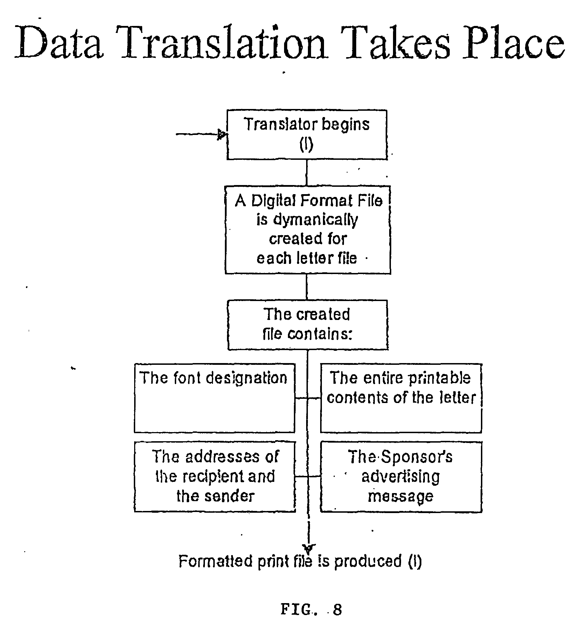

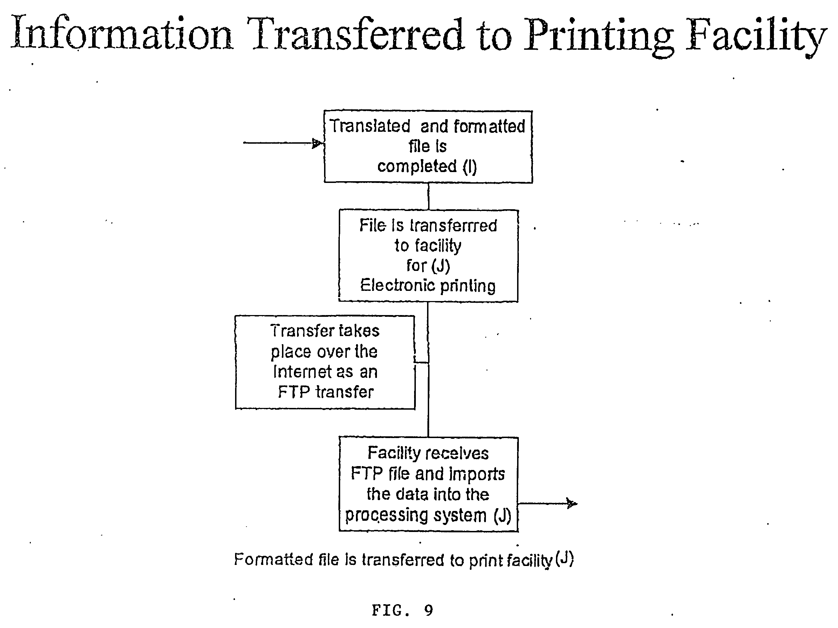

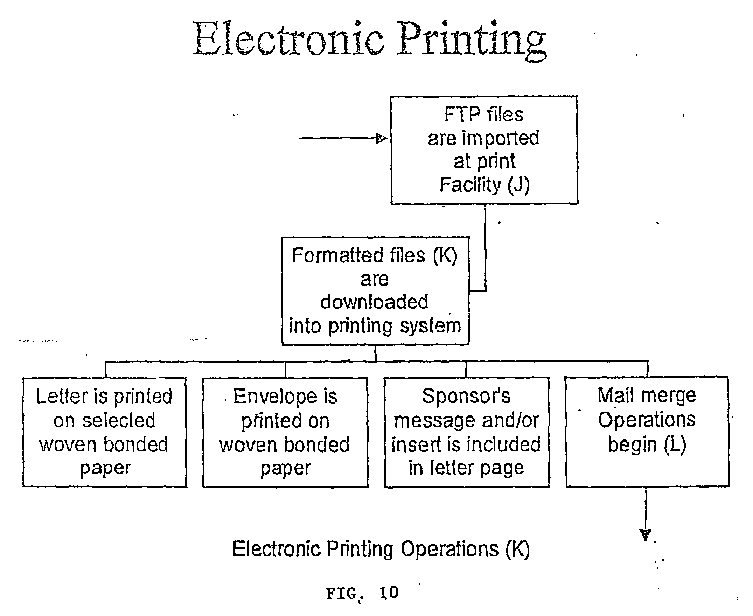

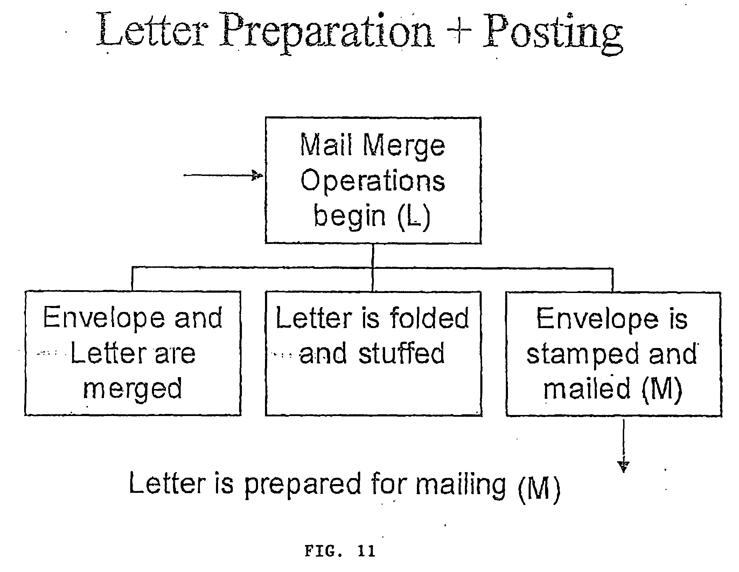

The processing of the data involved in the integration of the content of the letter and sponsor information involves multiple steps and translation of the information into a digitized signal for routing to a printer. This translation process, as depicted in Fig. 8, is represented by the sequential conversion of the letter and sponsor information into a file format that can be either archived for editing or printing at a later date; or, sent directly to a printing station. As more fully illustrated in Fig. 9, the formatted file is processed by a printing facility to allow electronic printing of an integrated document containing both the personal letter from the site visitor to the recipient/addressee and the sponsor related promotional materials. This printing process, in summary, involves, initially, an electronic "merging" of the components of file with the physical items of the mailing (letter page and envelope). In this electronic merging of information and paper, illustrated in Fig. 10, each of the components of the completed letter are directed to a printer for printing on the appropriate paper stock. Thereafter, as shown in Fig 11, the envelope is physically placed ("stuffed") into the envelope, the envelope scaled and posted for delivery.

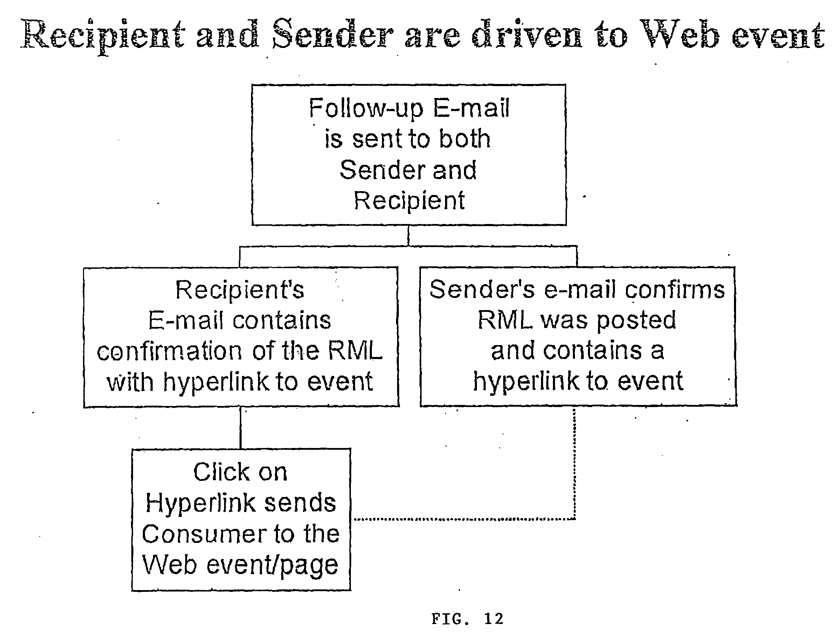

Upon delivery/receipt of the RML to the recipient/addressee, the recipient/addressee is exposed to the sponsor's promotional material. Because of the personalized selection involved in the targeting of the recipient/addressee for the sponsor's promotional material, the recipient/addressee is more likely than not to review these materials and favorably consider the products and services offered therein. Also, as shown in Fig. 12, a follow-up e-mail may be sent to both sender and recipient ofthe letter. Moreover, because the recipient/addressee has been identified by someone who is personally acquainted with him and bis personal lifestyle and preferences, the recipient is more likely to open and read the message and future contact/follow-up by the sponsor is also more likely to be positively received.

As a result of the generation of the Real Mail Letter, the system has now compiled intelligent and first hand information as to the two individuals (both the RMN visitor and the RML recipient), including some statistical information (zip codes, gender, e-mail address, physical address, etc.) and, to some extent, the personal preferences of each which can be used to structure future solicitations.

The foregoing description of this invention has been provided as illustrative of a number of the preferred embodiments thereof and is not intended as defining the metes and bounds of the invention, which has been reserved for the following claims.

## Claims

1. A system for the Internet generation of postable letter containing a personal message and direct mail advertising to a potential consumer who is pre-disposed to favorably consider said advertising, wherein said consumer has been pre-selected for receipt of said advertising based upon: (a) demographic information provided to the system by a personal acquaintance of said potential consumer; or (b) the selection of product specific information available on the system by said personal acquaintance who is knowledgeable of the personal needs and/or preferences of said potential consumer, comprising:
A. a database having a plurality of retrievable sponsor records relating to products and services offered by said sponsors, including promotional and advertising materials unique to each sponsor, said retrievable sponsor's records being keyed to certain consumer demographic information and/or significant social/life style milestones;
B. means for creation of a postable personal letter to an addressee on a system server by an acquaintance of said addressee,
C. means for prompting said acquaintance to supply personal information relative to said addressee of said personal letter, including an e-mail addressee and street address for said addressee, said personal information for said addressee corresponding to at least some of said retrievable sponsor records which are targeted for said addressee, and
D. means for merging said personal letter and said addressee targeted retrievable sponsors records, into a file format suitable for printing and posting said merged file to said addressee.

2. The system of Claim 1, wherein said means for prompting said acquaintance to supply personal information relative to said addressee includes at least one system prompt for said addressee demographic information selected from the group consisting of said consumer's e-mail address, street address, zip code, gender, age, marital status, attained educational level, income bracket, principle residence, monthly mortgage payment, monthly rent payment, pet ownership, nationality, professional affiliations, type of car driven, credit card preference and recreational activities.

3. The system of Claim 1, wherein said means for prompting said acquaintance to supply personal information relatíve to said addressee includes at least one system prompt for said addressee's significant social/life style milestones selected from the group consisting of birth of a newborn, engagement to married, dissolution of marriage, relocation of residence, purchase of new residence, graduation from educational institution, attainment of new job and promotion within career path.

4. The system of Claim 1, wherein said system includes an additional means for generation of a postable hard copy of said personal letter and said addressee targeted retrievable sponsors rccords.

5. The system of Claim I, wherein said system includes an additional means for generation of a follow-up message to said personal acquaintance of said addressee, said addressee or to both said personal acquaintance of said addressee and said addressee.

6. A method for creation of a postable direct marketing advertising piece from an Internet generated message to an addressee, based upon the matching of demographic information relative to said addressee, and a database having a plurality of retrievable sponsor records relating to products and services offered by said sponsors,
comprising:
Providing a system having
(1). a database having a plurality of retrievable sponsor records relating to products and services offered by said sponsors, including promotional and advertising materials unique to each sponsor, said retrievable sponsor's records being keyed to certain consumer demographic information and/or significant social/life style milestones;
(2). means for creation of a postable personal letter to an addressee on a system server by a personal acquaintance of said addressee,
(3), means for prompting said acquaintance to:
supply personal information relative to said addressee of said personal letter, including an e-mail addressee and street address for said addressee, or
select a significant social/life style milestones appropriate for said addressee.
said addressee personal information or significant social/life style milestones for said addressee corresponding to at least some of said retrievable sponsor records which arc targeted for said addressee, and
(4). means for merging said personal letter and said addressee targeted retrievable sponsors records, into a file format suitable for printing.

7. A method in accordance with Claim 6, wherein said retrievable sponsor's records are interactively modified in response to recently supplied personal information or significant social/lifestyle milestones supplied by said acquaintance or said addressee.

8. A computer readable medium having recorded thereon executable instructions for configuring a computer to perform the method of either of claims 6 or 7.

9. A signal carrying executable instructions for configuring a computer to perform the method of either of claims 6 or 7.
